# EUROPEAN PATENT SPECIFICATION

(11) **EP 1 115 110 B1**
(45) Date of publication and mention of the grant of the patent: **08.12.2004**
(21) Application number: 00309202.0
(22) Date of filing: 19.10.2000
(51) Int. Cl.: G11B 7/09, G11B 7/00, G11B 7/095, G11B 7/125, G11B 7/135

(54) **Optical pickup apparatus**
Optische Abtastvorrichtung
Dispositif à tête optique

(30) Priority: 06.01.2000 KR 2000000519
(43) Date of publication of application: 11.07.2001
(73) Proprietor: SAMSUNG ELECTRONICS CO. LTD., Suwon-city, Kyounggi-do 441-742 (KR)
(72) Inventor: Kim, Tae-kyung, Paldal-gu, Suwon-city, Kyungki-do (KR); Chung, Chong-sam, Seongnam-city, Kyungki-do (KR); Ahn, Young-man, Paldal-gu, Suwon-city, Kyungki-do (KR); Suh, Hea-jung, Seongnam-city, Kyungki-do (KR)
(74) Representative: Chugg, David John

(56) References cited:
- US-A- 5 712 842
- US-A- 6 005 834
- OHTAKI S ET AL: "THE APPLICATIONS OF A LIQUID CRYSTAL PANEL FOR THE 15 CBYTE OPTICALDISK SYSTEMS" JAPANESE JOURNAL OF APPLIED PHYSICS, PUBLICATION OFFICE JAPANESE JOURNAL OF APPLIED PHYSICS. TOKYO, JP, vol. 38, no. 3B, March 1999 (1999-03), pages 1744-1749, XP000905987 ISSN: 0021-4922
- YAMAMOTO ET AL: "0.8-NA two element objective lens for the optical disk" JAPANESE JOURNAL OF APPLIED PHYSICS, PUBLICATION OFFICE JAPANESE JOURNAL OF APPLIED PHYSICS. TOKYO, JP, vol. 36, no. 1B, 1997, pages 456-459, XP002084439 ISSN: 0021-4922

## Description

The present invention relates to an optical pickup apparatus for recording/reproducing information on/from a high density optical disk so that coma and spherical aberration due to changes in the thickness of the optical disk can be corrected, and more particularly, to an optical pickup apparatus in which a main light spot and an auxiliary light spot having spherical aberration are allowed to be formed on an optical disk and aberration can be corrected based on the main light spot and the auxiliary light spot received by a photodetector.

US 5,712,842 discloses an optical pickup device including a convex lens having a flat surface opposed to a surface of an optical recording medium for eliminating a spherical aberration due to a thickness error of the optical disk, by controlling the distance between the light incident surface of the optical recording medium and the flat surface of the convex lens.

In general, an optical pickup apparatus records or reproduces information recorded on or from an optical disk. With high densification of optical disks, light emitted from a light source is required to have a shorter wavelength while the numerical aperture (NA) of the light increases. Thus, when the optical pickup apparatus records/reproduces information on/from the optical disk, if the optical disk is inclined, that is, if the surface of the optical disk on which information is recorded is inclined with respect to the optical axis, a coma aberration is generated due to the inclination. Also, spherical aberration is generated due to the shorter wavelength of the light source due to the high densification of the optical disk, a high NA, and a change in the thickness of the optical disk and the wavelength accompanied by the accommodation of the compatibility with a low density optical disk.

Here, since coma aberration W₃₁ satisfies Equation 1, in an optical pickup with a high NA, a coma aberration due to the inclination of the optical disk increases compared to a relatively low NA with respect to the same inclination of the optical disk.${\text{W}}_{\text{31}} \text{∝ NA}$

Also, the recording capacity of the optical disk is determined by the wavelength λ of the light emitted from the light source and the NA of an objective lens, as shown in Equation 2.$\text{Diameter of focused spot ∝ λ /NA}$

Also, spherical aberration W_{40d} generated due to a deviation Δd in the thickness of the optical disk is defined by Equation 3.${\text{W}}_{\text{40}} {\text{}}_{\text{d}} \text{=} \frac{{\text{n}}^{\text{2}} \text{- 1}}{\text{8} {\text{n}}^{\text{3}}} \text{(} \text{NA} {\text{)}}^{\text{4}} \frac{\text{Δ} \text{d}}{\text{λ}}$

Here, ***n*** denotes the refractive index of the substrate of the optical disk and ***d*** denotes the thickness of the substrate.

Thus, when it is desirable to set the recording density of the optical disk to 15 gigabytes or greater, according to Equation 2, a light source emitting light having a short wavelength of about 410 nm and an objective lens having an NA of 0.6 or greater are required to be adopted. However, when the NA of the objective lens is increased in order to increase the recording density of the optical disk, since the spherical aberration W_{40d} generated due to the deviation Δd in the thickness of the optical disk drastically increases because the spherical aberration is proportional to NA to the fourth power, (NA)⁴.

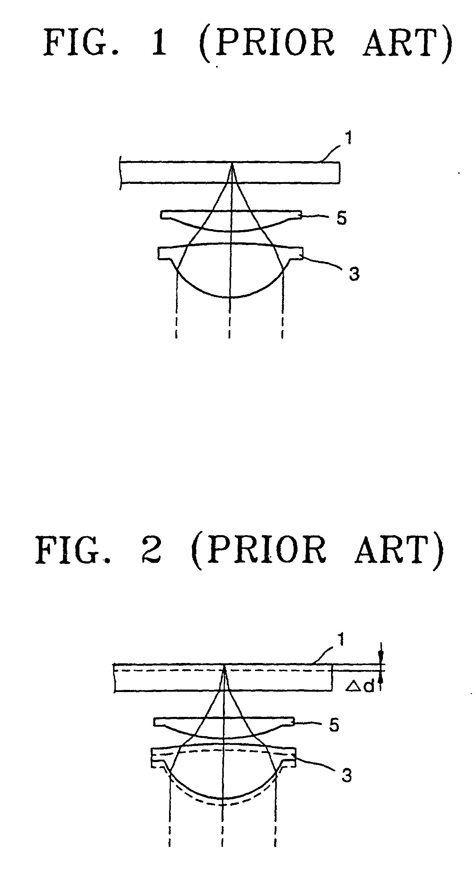

Referring to Figure 1, a conventional optical disk aberration correcting apparatus to correct coma and spherical aberration includes an objective lens 3 for primarily focusing incident light and a focusing lens 5 for secondarily focusing the light focused by the objective lens 3 to form a spot on an optical disk 1.

When the optical disk 1 is inclined in one direction, coma aberration is corrected by driving the focusing lens 5 in one direction. Also, when the spherical aberration due to the thickness deviation Δd of the optical disk 1 is to be corrected, as shown in Figure 2, the spherical aberration is corrected by adjusting the interval between the focusing lens 5 and the objective lens 3.

In the conventional optical disk aberration correcting apparatus having the above structure, since it is necessary to a) drive the objective lens and the focusing lens in a direction to control the tracking and focusing of a light spot, b) drive the focusing lens to be inclined, and c) drive the objective lens and the focusing lens to adjust the interval therebetween, the structure of the actuator is complicated.

With a view to solve or reduce the above problems, it is an aim of embodiments of the present invention to provide an optical pickup apparatus which can correct spherical aberration due to a change in the thickness of the optical disk, by forming at least two light spots on the optical disk instead of the conventional focusing lens.

According to a first aspect of the invention, there is provided an optical pickup apparatus comprising: a light source for emitting light; an optical path changing means for changing a proceeding path of incident light, an objective lens for focusing incident light to form a light spot on an optical disk; a light splitting mean; a photodetector including first and second light receiving portions; and a signal processing portion; characterised by: the light splitting means being provided on the optical path between the light source and the optical path changing means, for splitting incident light into at least two light beams including first and second light beams so that at least two light spots including a main light spot having no aberration and an auxiliary light spot having a predetermined spherical aberration are formed on the optical disk; the photodetector including first and second light receiving portions for respectively receiving the first and second incident light beams reflected by the optical disk and passing through the optical path changing means, wherein Sₘ is a main reproduction signal produced by the first light receiving portion receiving and optoelectrically converting light received from the main light spot and S_{sub} is a sub-reproduction signal produced by the second light receiving portion receiving and optoelectrically coverting light received from the auxiliary light spot; the signal processing portion being arranged to calculate a reproduction signal based on the following equation to correct aberration generated due to deviations and thickness of the optical disk, Reproduction signal = Sₘ+ k (Sₘ-S_{sub}) wherein k is gain factor controlled according to deviations in the thickness of the optical disk.

Preferably, the light splitting means comprises a holographic optical element for generating a predetermined spherical aberration to the second light beam so as to make the first and second light beams having no aberration which is polarized in one direction and having spherical aberration which is polarized in the other direction, respectively, and wherein the optical path changing means comprises: a beam splitter for changing the proceeding path of light by transmitting or reflecting incident light at a predetermined ratio of the amount of light, and a polarizing beam splitter, provided on the optical path between the beam splitter and the photodetector, for transmitting or reflecting incident light reflected by the optical disk and passing through the beam splitter according to the polarization of the light, and wherein the first and second light receiving portions of the photodetector are arranged so as to receive the first and second light beams split by the polarizing beam splitter.

Preferably, the signal processing portion, includes a delay for delaying the phase of a second signal in order to synchronize a first signal and the second signal which are detected and optoelectrically converted by the first and second light receiving portions.

Preferably, when spherical aberration W_{40d} of the auxiliary light spot generated due to the deviation Δd in the thickness of the optical disk is given by the following Equation, the absolute value of the spherical aberration W_{40d} being equal to or less than 3,${\text{W}}_{\text{40}} {\text{}}_{\text{d}} \text{=} \frac{{\text{n}}^{\text{2}} \text{-1}}{\text{8} {\text{n}}^{\text{3}}} \text{(} \text{NA} {\text{)}}^{\text{4}} \frac{\text{Δd}}{\text{λ}}$ wherein, n denotes a refractive index of a substrate of the optical disk, **d** denotes the thickness of the substrate, **NA** denotes the numerical aperture of the objective lens, and **λ** denotes the wavelength of the light emitted from the light source.

The signal processing portion may further comprise a feed-back circuit for making the gain factor **k** proportional to the amount of spherical aberration and minimizing jitter.

For a better understanding of the invention, and to show how embodiments of the same may be carried into effect, reference will now be made, by way of example, to the accompanying diagrammatic drawings in which:
Figure 1 is a diagram showing the conventional optical disk aberration correcting apparatus;
Figure 2 is a diagram showing the optical disk thickness deviation correcting operation of an optical disk aberration correcting apparatus of Figure 1;
Figure 3 is a diagram showing the optical configuration of an optical pickup apparatus according to a preferred embodiment of the present invention;
Figure 4 is a diagram showing the structure of an optical disk having a track pitch of 0.37*µ*m and a minimum mark length of 0.25 µm;
Figure 5 is a graph showing a reproduction signal according to the optical disk thickness deviation;
Figure 6 is a graph showing the comparison result of the signal (d₀-d₃₀) and the signal (d₃₀-d₆₀) of Figure 5;
Figure 7 is a graph showing the comparison result of the signal (d₀-d₆₀) and the signal (d₆₀-d₉₀) of Figure 5;
Figure 8 is a view showing a diffraction pattern of the holographic optical element of Figure 3;
Figure 9 is a diagram showing the optical configuration of an optical pickup apparatus according to another preferred embodiment of the present invention;
Figure 10 is a graph showing an eye-pattern for a 60 µm thickness deviation;
Figure 11 is a graph showing an eye-pattern for a 90 µm thickness deviation; and
Figure 12 is a graph showing an eye-pattern when the thickness deviation is corrected according to the preferred embodiments of the present invention.

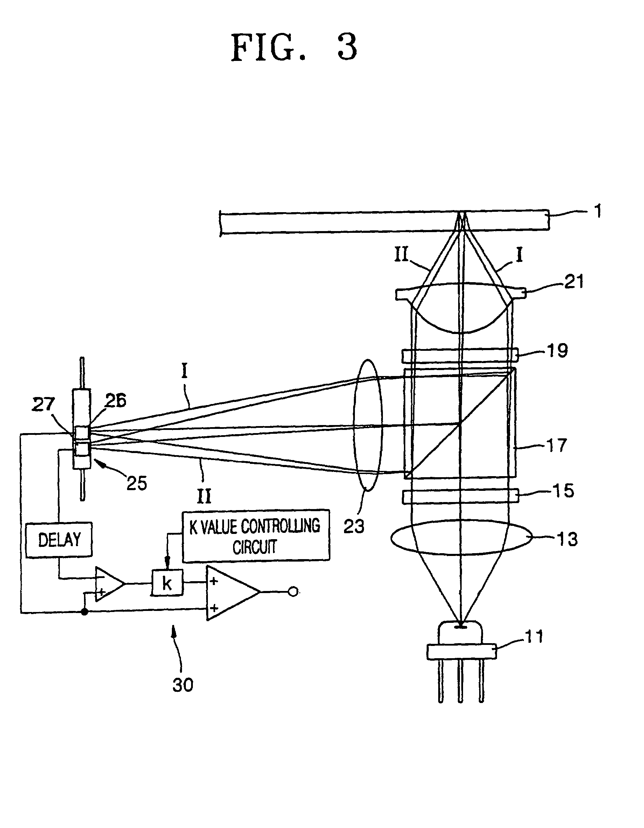

Referring to Figure 3, an optical pickup apparatus according to a preferred embodiment of the present invention includes a light source 11, an optical path changing means for changing the proceeding path of incident light, an objective lens 21 for focusing incident light, a light splitting means for dividing incident light so that at least two light spots are concurrently formed on the optical disk 1, a photodetector 25 for receiving light reflected from the optical disk 1, and a signal processing portion 30 for correcting the thickness deviation of the optical disk 1.

In order to increase the recording density of the optical disk 1 to 15 gigabytes or greater, a light source for emitting light having a short wavelength of about 410 nm and an objective lens having an NA of 0.6 and more are adopted as the light source 11 and the objective lens 21.

The divergent light emitted from the light source 11 passes through a collimating lens 13 to be focused and become a parallel beam. The parallel beam is split by the light splitting means into at least two light beams, including first and second light beams I and II. Here, the first and second light beams I and II are focused on the optical disk 1 by passing through the objective lens 21. The first light beam I forms a main light spot having no aberration and the second light beam II forms an auxiliary light spot having a predetermined spherical aberration.

To split the incident light into the first and second light beams I and II by the light splitting means and simultaneously make the first and second light beams I and II aplanatic light and light having a predetermined amount of spherical aberration, respectively, a holographic optical element 15 for generating a predetermined spherical aberration on the second light beam II is preferably provided.

The optical path changing means is provided on an optical path between the holographic optical element 15 and the objective lens 21 to change the proceeding path of incident light. That is, the light output from the light source 11 travels toward the objective lens 21 and the light output from the objective lens 21 travels toward the photodetector 25. Preferably, the optical path changing means includes a polarizing beam splitter 17 for changing the path of light by transmitting or reflecting the light according to the polarization direction of the incident light, and a phase delay plate 19 arranged on the optical path between the polarizing beam splitter 17 and the objective lens 21, for delaying the phase of the incident light. Here, the phase delay plate 19 is preferably a 1/4-wave plate which delays the phase of the incident light by λ/4 to alter an incident linear polarized light and an incident circular polarized light into a circular polarizedlight and a linear polarizedlight, respectively.

The objective lens 21 focuses each of the first and second light beams I and II split by the holographic optical element 15 so as to be formed at an adjacent track position on the optical disk 1. Here, the second light beam II is formed at the same track where the first light I is formed.

Each of the first and second light beams I and II reflected by the optical disk 1 passes through the objective lens 21, the phase delay plate 19 and the polarizing beam splitter 17 and is focused by a focusing lens 23 and received by the photodetector 25.

The photodetector 25 includes first and second light receiving portions 26 and 27 for receiving the first and second light beams I and II, respectively. The signal processing portion 30 corrects the thickness deviation of the optical disk 1 from the signals detected and optoelectrically converted by the first light receiving portion 26 and the second light receiving portion 27.

That is, the signal processing portion 30 corrects spherical aberration due to a change in the thickness of the optical disk by calculating a reproduction signal according to Equation 4.${\text{Reproduction signal = S}}_{\text{m}} {\text{+ k (S}}_{\text{m}} {\text{-S}}_{\text{sub}} \text{)}$

Here, **S**_{**m**} is a main reproduction signal by the main light spot which is received and optoelectrically converted by the first light receiving portion 26. **S**_{**sub**} is a sub-reproduction signal by the auxiliary light spot which is received and optoelectrically converted by the second light receiving portion 27. **k** denotes a gain factor.

Here, the value **k** changes according to the deviation in the thickness of the optical disk 1 and has a negative or positive value according to deviations in the thickness. That is, the value **k** controlled by a **k** value controlling circuit may be adjusted to be proportional to a signal by an optical disk thickness detecting sensor. Also, the value **k** may be adjusted by feeding back the result of monitoring jitter so that the jitter of the reproduction signal is made optimal.

By correcting the reproduction signal with the signal processing portion 30, as shown in Equation 3, the absolute value of the spherical aberration W_{40d} generated by the deviation Δd of the thickness of the optical disk 1 is 3 or less. Also, as shown in the drawing, the signal processing portion 30, preferably, further includes a delay. When the phase difference between the signals received by the first and second light receiving portions 26 and 27 is generated, the delay delays the phase of a signal having an earlier phase to synchronize the two signals.

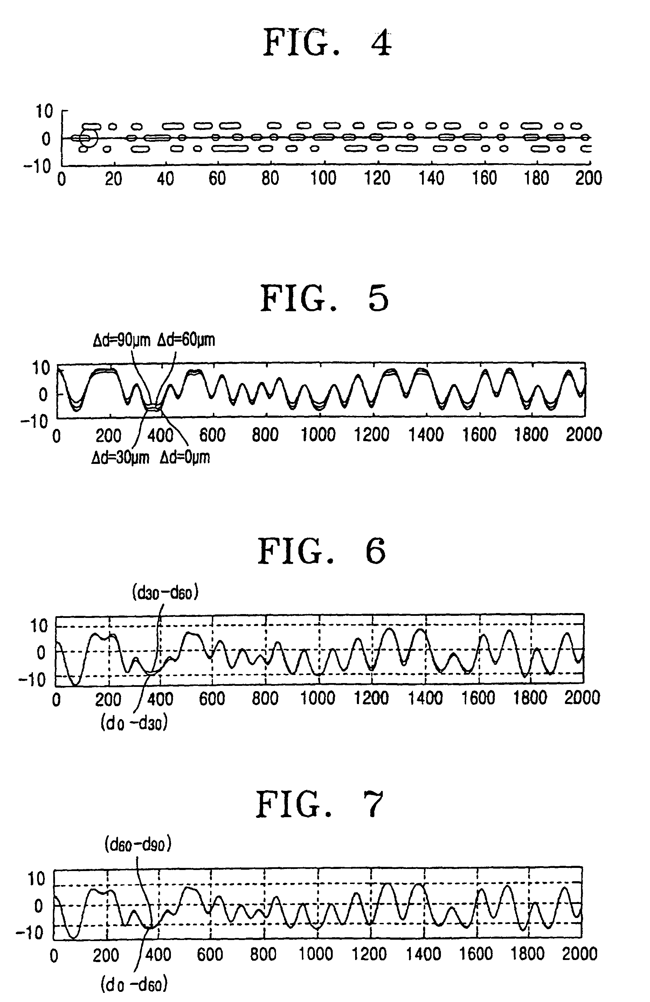

The operation of correcting the reproduction signal by the signal processing portion will be described with reference to Figures 4 through 7.

Figure 4 shows a part of an optical disk consisting of pits of three rows having a track pitch of 0.37 *µ*m and a minimum mark length of 0.25 *µ*m. Figure 5 shows the reproduction signal of the central track of Figure 4. Figure 5 shows reproduction signals (RF: radio frequency) when the thickness deviations of an optical disk substrate are 0, 30 µm, 60 µm and 90 µm.

First, when there is no thickness deviation and when there are thickness deviations of 30 µm, 60 µm and 90 µm, reproduction signals of a main light spot and an auxiliary light spot are defined as d₀, d₃₀, d₆₀ and d₉₀. Here, for example, it is assumed that there is no aberration in the main light spot by the holographic optical element 15 and the spherical aberration of the auxiliary light spot corresponds to 20 µm. When a thickness deviation of 30 µm is generated due to allowance in manufacturing a substrate of the optical disk 1, the reproduction signal of the main light spot is d₃₀ and the reproduction signal of the auxiliary light spot is the same as that of the signal d₆₀ having a deviation of 60 µm. Here, the reproduction signal of d₀ is obtained from the signals d₃₀ and d₆₀ as follows. First a signal (d₀-d₃₀) is added to the signal d₃₀ to obtain the signal d₀.

Also, when a signal (d₃₀-d₆₀) is proportional to the signal (d₀-d₃₀), the same signal as the signal do can be obtained from the operation of d₃₀+k(d₃₀-d₆₀). Here, "k" is the gain factor.

Figure 6 shows a result of comparing DC components and AC components of the signal (d₀-d₃₀) and the signal (d₃₀-d₆₀). Figure 7 shows the result of comparing DC components and AC components of the signal (d₀-d₆₀) and the signal (d₆₀-d₉₀). In comparing Figure 6 and Figure 7, it can be seen that there is a proportional relationship between these signals. Thus, it is noted that a signal with no spherical aberration can be reproduced from the calculation of Equation 4.

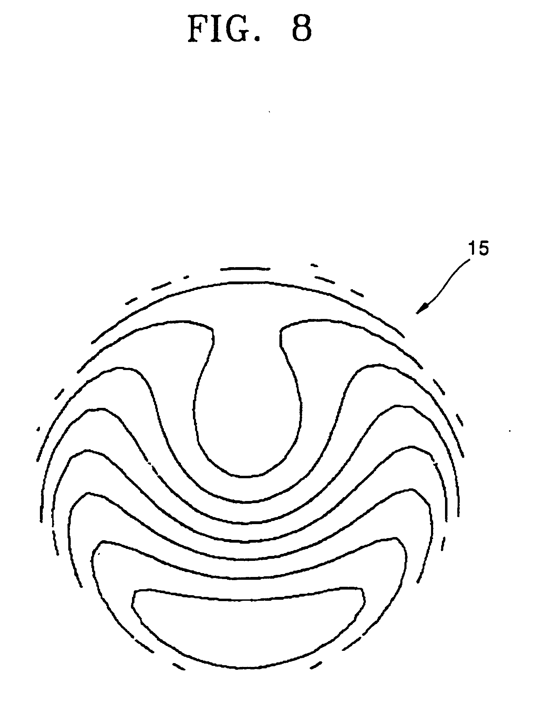

Also, since the optical pickup apparatus according to a preferred embodiment of the present invention forms the holographic optical element 15 to have a pattern of a predetermined shape, as shown in Figure 8, coma aberration due to the inclination of the optical disk 1 can be corrected.

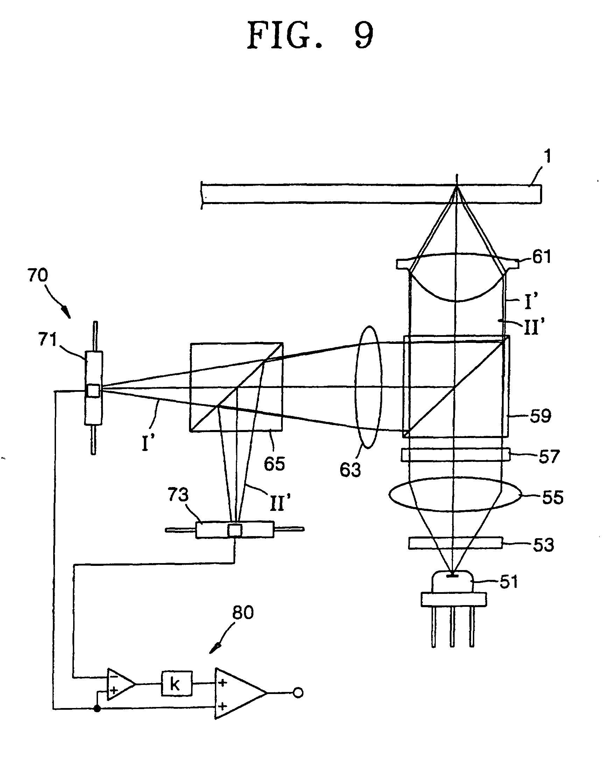

Referring to Figure 9, an optical pickup apparatus according to another preferred embodiment of the present invention includes a light source 51, an optical path changing means for changing the proceeding path of incident light, an objective lens 61 for condensing incident light, a light splitting means for splitting incident light such that at least two light spots can be concurrently formed on the optical disk 1, a photodetector 70. for receiving light reflected by the optical disk 1, and a signal processing portion 80 for correcting the thickness deviation of the optical disk 1. Here, since the light source 51 and the objective lens 61 are substantially the same, as shown in Figure 3, detailed descriptions thereof will be omitted.

Divergent light emitted from the light source 51 is condensed and becomes a parallel beam, while passing through a collimating lens 55. The parallel beam is split into at least two light beams including first and second light beams I' and II' by the light splitting means. Here, the first and second light beams I' and II' pass through the objective lens 61 and are focused on the optical disk 1. The first light beam I' forms a main light spot having no aberration and the second light beam II' forms an auxiliary light spot having a predetermined spherical aberration. Here, the first and second light beams I' and II' are focused at the same point on the optical disk 1 and are classified by the polarizing directions.

For the above operation, a polarizing holographic optical element 57 for generating a predetermined spherical aberration of the second light beam II' to make the first light beam I' a polarized light in one direction having no aberration and the second light beam II' a polarized light in another direction having spherical aberration, is provided as the light splitting means. Here, a phase delay plate 53 such as a 1/4-wave plate for altering the direction of polarization by delaying the phase of the incident light is further provided on the optical path between the light source 51 and the polarizing holographic optical element 57.

The optical path changing means is provided on the optical path between the polarizing holographic optical element 57 and the objective lens 61 to change the proceeding path of the incident light. That is, the incident light emitted from the light source 51 is made to proceed toward the objective lens 61 while the incident light emitted from the objective lens 61 is made to proceed toward the photodetector 70. For this purpose, the optical path changing means includes a beam splitter 59 for altering the proceeding path of the light by transmitting or reflecting the incident light at a predetermined ratio of the amount of light, and a polarizing beam splitter provided on the optical path between the beam splitter 59 and the photodetector 70 for transmitting or reflecting the incident light reflected by the optical disk 1 and passing through a beam splitter 65, according to the polarization thereof. Here, a focusing lens 63 for focusing incident light can further be provided on the optical path between the beam splitter 59 and the polarizing beam splitter 65.

First and second light receiving portions 71 and 73 of the photodetector 70 are arranged to be capable of receiving the first and second light beams I' and II' split by the polarizing beam splitter 65, respectively. Thus, the first light beam I' of one polarization split by the polarizing beam splitter 65 is received by the first light receiving portion 71 and the second light beam II' of the other polarization is received by the second light receiving portion 73.

The signal processing portion 80 compensates for the deviation in the thickness of the optical disk 1 from the signal detected and optoelectrically converted through the respective first and second light receiving portions 71 and 73. Since the signal processing portion 80 is substantially the same as that described in the previous embodiment, a detailed description thereof will be omitted. Preferably, the signal processing portion 80 further includes a feed-back circuit (not shown). The feed-back circuit makes the gain factor **k** of Equation 4 proportional to the amount of spherical aberration and minimizes jitter.

As described above, in the optical pickup apparatus according to the above preferred embodiments of the present invention, since the main light spot and the auxiliary light spot are formed on the optical disk by using the first light with no aberration and the second light having spherical aberration, and since the reproduction signals of the light received by the respective first and second light receiving portions of the photodetector are detected through calculation using Equation 4, the deviation in the thickness of the optical disk and the aberration due to the inclined optical disk can be corrected so that the jitter property of the reproduction signal can be remarkably improved.

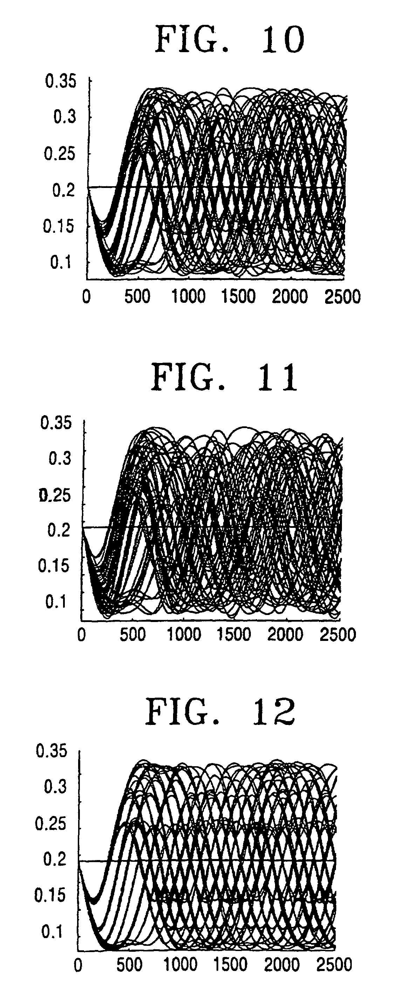

That is, Figure 10 is a graph showing an eye-pattern for a 60 µm thickness deviation. Figure 11 is a graph showing an eye-pattern for a 90 *µ*m thickness deviation. Figure 12 is a graph showing an eye-pattern when the thickness deviation is compensated for by making calculations using Equation 4.

Referring to Figures 10 and 11, it can be seen that the case of the 60 *µ*m thickness deviation has a jitter value of 10.1% and the case of the 90 µm thickness deviation has a jitter value of 15.5%. When the thickness is corrected by setting the gain factor **k** to 1.0, the jitter value is drastically improved to 7.7%, as shown in Figure 12.

## Claims

1. An optical pickup apparatus comprising:
a light source (11) for emitting light;
an optical path changing means for changing a proceeding path of incident light;
an objective lens (21) for focusing incident light to form a light spot on an optical disk (1);
a light splitting mean;
a photodetector (25) including first (26) and second (27) light receiving portions; and
a signal processing portion (30);
**characterised by**:
the light splitting means being provided on the optical path between the light source (11) and the optical path changing means, for splitting incident light into at least two light beams including first and second light beams so that at least two light spots including a main light spot having no aberration and an auxiliary light spot having a predetermined spherical aberration are formed on the optical disk;
the photodetector (25) including first and second light receiving portions for respectively receiving the first and second incident light beams reflected by the optical disk (1) and passing through the optical path changing means, wherein Sₘ is a main reproduction signal produced by the first light receiving portion (26) receiving and optoelectrically converting light received from the main light spot and S_{sub} is a sub-reproduction signal produced by the second light receiving portion (27) receiving and optoelectrically coverting light received from the auxiliary light spot;
the signal processing portion being arranged to calculate a reproduction signal based on the following equation to correct aberration generated due to deviations and thickness of the optical disk,${\text{Reproduction signal = S}}_{\text{m}} {\text{+ k(S}}_{\text{m}} {\text{-S}}_{\text{sub}} \text{)}$
wherein k is a gain factor controlled according to deviations in the thickness of the optical disk.

2. The apparatus as claimed in claim 1, wherein the light splitting means comprises a holographic optical element (15) for generating a predetermined spherical aberration on the second light beam so as to make the first and second light beams having no aberration and having spherical aberration, respectively, and
wherein the optical path changing means comprises:
a polarizing beam splitter (17) for changing the proceeding path of light by transmitting or reflecting incident light according to the direction of polarization, and
a phase delay plate (19) for delaying the phase of incident light provided on the optical path between the polarizing beam splitter (17) and the objective lens (21).

3. The apparatus as claimed in claim 1, wherein the light splitting means comprises a holographic optical element (57) for generating a predetermined spherical aberration to the second light beam so as to make the first and second light beams having no aberration which is polarized in one direction and having spherical aberration which is polarized in the other direction, respectively, and
wherein the optical path changing means comprises:
a beam splitter (59) for changing the proceeding path of light by transmitting or reflecting incident light at a predetermined ratio of the amount of light, and
a polarizing beam splitter (65), provided on the optical path between the beam splitter and the photodetector, for transmitting or reflecting incident light reflected by the optical disk and passing through the beam splitter according to the polarization of the light, and
wherein the first and second light receiving portions of the photodetector are arranged so as to receive the first and second light beams split by the polarizing beam splitter.

4. The apparatus as claimed in any preceding claim, wherein:
the signal processing portion (30), includes a delay for delaying the phase of a second signal in order to synchronize a first signal and the second signal which are detected and optoelectrically converted by the first and second light receiving portions.

5. The apparatus as claimed in any preceding claim, wherein, when spherical aberration W_{40d} of the auxiliary light spot generated due to the deviation Δd in the thickness of the optical disk is given by the following Equation, the absolute value of the spherical aberration W_{40d} being equal to or less than 3,${\text{W}}_{\text{40}} {\text{}}_{\text{d}} \text{=} \frac{{\text{n}}^{\text{2}} \text{- 1}}{\text{8} {\text{n}}^{\text{3}}} \text{(} \text{NA} {\text{)}}^{\text{4}} \frac{\text{Δd}}{\text{λ}}$ wherein, n denotes a refractive index of a substrate of the optical disk, **d** denotes the thickness of the substrate, **NA** denotes the numerical aperture of the objective lens, and λ denotes the wavelength of the light emitted from the light source.

6. The apparatus as claimed in any preceding claim, wherein the signal processing portion further comprises a feed-back circuit for making the gain factor **k** proportional to the amount of spherical aberration and minimizing jitter.

## Patentansprüche

1. Optische Abnehmervorrichtung, die umfasst:
eine Lichtquelle (11), die Licht emittiert;
eine Lichtweg-Änderungseinrichtung, die einen Laufweg von auftreffendem Licht ändert;
eine Objektivlinse (21), die auftreffendes Licht fokussiert, um einen Lichtpunkt auf einer optischen Platte (1) auszubilden;
eine Lichtteileinrichtung;
einen Fotodetektor (25), der einen ersten (26) und einen zweiten Lichtempfangsabschnitt enthält; und
einen Signalverarbeitungsabschnitt (30);
**dadurch gekennzeichnet, dass**:
die Lichtteileinrichtung auf dem Lichtweg zwischen der Lichtquelle (11) und der Lichtweg-Änderungseinrichtung vorhanden ist, um auftreffendes Licht in wenigstens zwei Lichtstrahlen zu teilen, die einen ersten und einen zweiten Lichtstrahl einschließen, so dass wenigstens zwei Lichtpunkte, die einen Haupt-Lichtpunkt ohne Aberration und einen Zusatz-Lichtpunkt mit einer vorgegebenen sphärischen Aberration einschließen, auf der optischen Platte ausgebildet werden;
der Fotodetektor (25) einen ersten und einen zweiten Lichtempfangsabschnitt enthält, die den ersten bzw. den zweiten auftreffenden Lichtstrahl empfangen, die von der optischen Platte (1) reflektiert werden und durch die Lichtweg-Änderungseinrichtung hindurchtreten, wobei Sₘ ein Haupt-Wiedergabesignal ist, das durch den ersten Lichtempfangsabschnitt (26) erzeugt wird, der von dem Haupt-Lichtpunkt empfangenes Licht empfängt und optoelektrisch umwandelt, und S_{sub} ein Unter-Wiedergabesignal ist, das von dem zweiten Lichtempfangsabschnitt (27) erzeugt wird, der von dem Zusatz-Lichtpunkt empfangenes Licht empfängt und optoelektrisch umwandelt;
der Signal-Verarbeitungsabschnitt so eingerichtet ist, dass er ein Wiedergabesignal auf Basis der folgenden Gleichung berechnet, um Aberration zu korrigieren, die aufgrund von Abweichungen der Dicke der optischen Platte entsteht,${\text{Wiedergabesignal = S}}_{\text{m}} {\text{+ k(S}}_{\text{m}} {\text{-S}}_{\text{sub}} \text{),}$
wobei k ein Verstärkungsfaktor ist, der entsprechend Abweichungen der Dicke der optischen Platte gesteuert wird.

2. Vorrichtung nach Anspruch 1, wobei die Lichtteileinrichtung ein holografisches optisches Element (15) umfasst, das eine vorgegebene sphärische Aberration an dem zweiten Lichtstrahl erzeugt, um zu bewirken, dass der erste und der zweite Lichtstrahl keine Aberration bzw. sphärische Aberration haben, und
wobei die Lichtweg-Änderungseinrichtung umfasst:
einen polarisierenden Strahlteiler (17), der den Laufweg von Licht ändert, indem er auftreffendes Licht entsprechend der Polarisationsrichtung durchlässt oder reflektiert, und
eine Phasenverzögerungsplatte (19), die die Phase von auftreffendem Licht verzögert und auf dem Lichtweg zwischen dem polarisierenden Strahlteiler (17) und der Objektivlinse (21) vorhanden ist.

3. Vorrichtung nach Anspruch 1, wobei die Lichtteileinrichtung ein holografisches optisches Element (57) umfasst, das eine vorgegebene sphärische Aberration des zweiten Lichtstrahls erzeugt, um zu bewirken, dass der erste und der zweite Lichtstrahl keine Aberration hat und in einer Richtung polarisiert ist, bzw. sphärische Aberration hat und in der anderen Richtung polarisiert ist,
wobei die Lichtweg-Änderungseinrichtung umfasst:
einen Strahlteiler (59), der den Laufweg von Licht ändert, indem er auftreffendes Licht in einem vorgegebenen Verhältnis der Lichtmenge durchlässt oder reflektiert, und
einen polarisierenden Strahlteiler (65), der auf dem Lichtweg zwischen dem Strahlteiler und dem Fotodetektor vorhanden ist, um auftreffendes Licht, das von der optischen Platte reflektiert wird und durch den Strahlteiler durchtritt, entsprechend der Polarisation des Lichtes durchzulassen oder zu reflektieren, und
wobei der erste und der zweite Lichtempfangsabschnitt des Fotodetektors so eingerichtet sind, dass sie den ersten und den zweiten Lichtstrahl, die durch den polarisierenden Strahlteiler geteilt werden, empfangen.

4. Vorrichtung nach einem der vorangehenden Ansprüche, wobei:
der Signalverarbeitungsabschnitt (30) ein Verzögerungsglied enthält, das die Phase eines zweiten Signals verzögert, um ein erstes Signal und das zweite Signal zu synchronisieren, die durch den ersten und den zweiten Lichtempfangsabschnitt erfasst und optoelektrisch umgewandelt werden.

5. Vorrichtung nach einem der vorangehenden Ansprüche, wobei, wenn sphärische Aberration W_{40d} des Zusatz-Lichtpunkts, die aufgrund der Abweichung Δd der Dicke der optischen Platte erzeugt wird, durch die folgende Gleichung gegeben ist, der Absolutwert der sphärischen Aberration W_{40d} gleich oder kleiner 3 ist,${\text{W}}_{\text{40}} {\text{}}_{\text{d}} \text{=} \frac{{\text{n}}^{\text{2}} \text{-1}}{\text{8} {\text{n}}^{\text{3}}} \text{(} \text{NA} {\text{)}}^{\text{4}} \frac{\text{Δ} \text{d}}{\text{λ}}$ wobei n einen Brechungsindex eines Substrats der optischen Platte bezeichnet, d die Dicke des Substrats bezeichnet, NA die numerische Apertur der Objektivlinse bezeichnet und λ die Wellenlänge des von der Lichtquelle emittierten Lichtes bezeichnet.

6. Vorrichtung nach einem der vorangehenden Ansprüche, wobei der Signalverarbeitungsabschnitt des Weiteren eine Rückführschaltung umfasst, die bewirkt, dass der Verstärkungsfaktor k proportional zum Betrag der sphärischen Aberration ist, und Jitter auf ein Minimum verringert.

## Revendications

1. Dispositif de lecture optique comportant :
une source lumineuse (11) pour émettre une lumière,
des moyens de changement de trajet optique pour changer un trajet de déplacement d'une lumière incidente,
un objectif (21) pour focaliser une lumière incidente afin de former un spot lumineux sur un disque optique (1),
des moyens de division de lumière,
un photodétecteur (25) incluant des première (26) et seconde (27) parties de réception de lumière, et
une partie de traitement de signal (30),
**caractérisé en ce que** :
les moyens de division de lumière sont agencés sur le trajet optique entre la source lumineuse (11) et les moyens de changement de trajet optique, pour diviser une lumière incidente en au moins deux faisceaux lumineux incluant des premier et second faisceaux lumineux de sorte qu'au moins deux spots lumineux incluant un spot lumineux principal n'ayant aucune aberration et un spot lumineux auxiliaire ayant une aberration sphérique prédéterminée sont formés sur le disque optique,
le photodétecteur (25) inclut des première et seconde parties de réception de lumière pour recevoir respectivement les premier et second faisceaux lumineux incidents réfléchis par le disque optique (1) et passant à travers les moyens de changement de trajet optique, où Sₘ est un signal de lecture principale produit par la première partie de réception de lumière (26) recevant et convertissant de manière opto-électrique une lumière reçue depuis le spot lumineux principal et S_{sub} est un signal de sous-lecture produit par la seconde partie de réception de lumière (27) recevant et convertissant de manière opto-électrique une lumière reçue depuis le spot lumineux auxiliaire,
la partie de traitement de signal est conçue pour calculer un signal de lecture sur la base de l'équation suivante afin de corriger une aberration générée du fait des écarts d'épaisseur du disque optique,${\text{signal de reproduction = S}}_{\text{m}} {\text{+ k (S}}_{\text{m}} {\text{- S}}_{\text{sub}} \text{)}$
où k est un facteur de gain commandé conformément aux écarts de l'épaisseur du disque optique.

2. Dispositif selon la revendication 1, dans lequel les moyens de division de lumière comportent un élément optique holographique (15) pour générer une aberration sphérique prédéterminée dans le second faisceau lumineux de manière à amener les premier et second faisceaux lumineux à n'avoir aucune aberration et à avoir une aberration sphérique, respectivement, et
dans lequel les moyens de changement de trajet optique comportent :
un diviseur de faisceau de polarisation (17) pour changer le trajet de déplacement d'une lumière en transmettant ou en réfléchissant une lumière incidente conformément à la direction de polarisation, et
une plaque à retard de phase (19) pour retarder la phase d'une lumière incidente délivrée sur le trajet optique entre le diviseur de faisceau de polarisation (17) et l'objectif (21).

3. Dispositif selon la revendication 1, dans lequel les moyens de division de lumière comportent un élément optique holographique (57) pour générer une aberration sphérique prédéterminée dans le second faisceau lumineux de manière à amener les premier et second faisceaux lumineux à n'avoir aucune aberration en étant polarisé dans une direction et à avoir une aberration sphérique en étant polarisé dans l'autre direction, respectivement, et
dans lequel des moyens de changement de trajet optique comportent :
un diviseur de faisceau (59) pour changer le trajet de déplacement d'une lumière en transmettant ou en réfléchissant une lumière incidente à un rapport prédéterminé de la quantité de lumière, et
un diviseur de faisceau de polarisation (65), agencé sur le trajet optique entre le diviseur de faisceau et le photodétecteur, pour transmettre ou réfléchir une lumière incidente réfléchie par le disque optique et passant à travers le diviseur de faisceau conformément à la polarisation de la lumière, et
dans lequel les première et seconde parties de réception de lumière du photodétecteur sont conçues de manière à recevoir les premier et second faisceaux lumineux divisés par le diviseur de faisceau de polarisation.

4. Dispositif selon l'une quelconque des revendications précédentes, dans lequel :
la partie de traitement de signal (30) inclut un retard pour retarder la phase d'un second signal afin de synchroniser un premier signal et le second signal qui sont détectés et convertis de manière opto-électrique par les première et seconde parties de réception de lumière.

5. Dispositif selon l'une quelconque des revendications précédentes, dans lequel, lorsqu'une aberration sphérique W_{40d} du spot lumineux auxiliaire généré du fait de l'écart Δd de l'épaisseur du disque optique est donnée par l'équation suivante, la valeur absolue de l'aberration sphérique W_{40d} est égale ou inférieure à 3,${\text{W}}_{\text{40d}} \text{=} \frac{{\text{n}}^{\text{2}} \text{- 1}}{{\text{8n}}^{\text{3}}} {\text{(NA)}}^{\text{4}} \frac{\text{Δd}}{\text{λ}}$ où n désigne un indice de réfraction d'un substrat du disque optique, d désigne l'épaisseur du substrat, NA désigne l'ouverture numérique de l'objectif, et λ désigne la longueur d'onde de la lumière émise par la source lumineuse.

6. Dispositif selon l'une quelconque des revendications précédentes, dans lequel la partie de traitement de signal comporte de plus un circuit de rétroaction pour amener le facteur de gain k à être proportionnel à la quantité de l'aberration sphérique et minimiser une gigue.
